Europäisches Patentamt

European Patent Office

Office européen des brevets

(19)

(11) Numéro de publication : **0 374 158 B1**

(12) **FASCICULE DE BREVET EUROPEEN**

(45) Date de publication du fascicule du brevet :
**02.09.92 Bulletin 92/36**

(51) Int. Cl.⁵ : **C04B 35/52, F16D 69/02**

(21) Numéro de dépôt : **88905871.5**

(22) Date de dépôt : **16.06.88**

(86) Numéro de dépôt international :
**PCT/FR88/00317**

(87) Numéro de publication internationale :
**WO 88/10245 29.12.88 Gazette 88/28**

(54) **PROCEDE DE FABRICATION D'UNE PIECE NOTAMMENT D'UN DISQUE DE FREIN EN CARBONE-CARBONE ET PIECE OBTENUE.**

(30) Priorité : **18.06.87 FR 8708518**

(43) Date de publication de la demande :
**27.06.90 Bulletin 90/26**

(45) Mention de la délivrance du brevet :
**02.09.92 Bulletin 92/36**

(84) Etats contractants désignés :
**BE CH DE GB IT LI**

(56) Documents cités :
**FR-A- 2 065 134**
**FR-A- 2 144 329**
**GB-A- 1 549 687**
**GB-A- 2 028 230**
**US-A- 4 318 955**

(73) Titulaire : **AEROSPATIALE Société Nationale Industrielle**
**37, Boulevard de Montmorency**
**F-75781 Paris Cédex 16 (FR)**

(72) Inventeur : **CHAREIRE, Jean-Louis**
**66, rue Aristide-Briand**
**F-92300 Levallois (FR)**
Inventeur : **SALEM, Jean**
**5, rue Auguste-Godard**
**F-95150 Taverny (FR)**

(74) Mandataire : **Lhoste, Catherine et al**
**SOCIETE DE PROTECTION DES INVENTIONS**
**25, rue de Ponthieu**
**F-75008 Paris (FR)**

## Description

La présente invention a pour objet un procédé de fabrication d'une pièce en matériau composite du type carbonecarbone ainsi que les pièces obtenues par ce procédé. En particulier, ces pièces sont des disques de frein destinés à être utilisés sur des véhicules terrestres, sur des avions, ou sur des véhicules spaciaux (navette ou aéronef).

De façon plus générale, l'invention s'applique à tout type de pièces dans lesquelles le carbone-carbone joue un rôle structural.

Un matériau composite du type carbone-carbone est un matériau formé d'un substrat de fibres de renforcement en carbone, noyées dans une matrice en carbone ou en graphite.

Ces matériaux composites sont obtenus par densification d'un substrat poreux consistant, soit à imprégner la structure à densifier avec un hydrocarbure liquide ou une résine puis à pyrolyser l'hydrocarbure ou la résine de façon à obtenir une matrice de coke, soit à placer le substrat à densifier porté à une température suffisante dans un courant de gaz carboné afin de décomposer thermiquement ce gaz en carbone ou en graphite pyrolytique pouvant alors se déposer à l'intérieur du substrat.

Malheureusement, ces procédés de densification sont relativement longs donc coûteux. Pour la technique en phase vapeur (DCPV), ceci est lié à la difficulté de faire pénétrer le gaz à pyrolyser à l'intérieur du substrat poreux, cette difficulté augmentant avec l'épaisseur de la pièce. En outre, plus la porosité du substrat est faible, plus la pénétration du gaz carboné est difficile à réaliser. Cette difficulté de pénétration du gaz à pyrolyser conduit à des pièces de densité peu uniforme.

Pour la technique par imprégnation liquide, la longueur du procédé est dûe à la nécessité de recommencer plusieurs fois le cycle imprégnation.

La réalisation du substrat poreux à densifier est réalisée par tissage uni ou multidirectionnel, les trous éventuellement formés lors du tissage ou de l'aiguilletage servant uniquement au passage des fibres de renforcement en carbone du matériau composite.

Par ailleurs, on connaît des disques de frein réalisés en un matériau homogène, généralement en métal, possédant une multitude de trous orientés selon l'axe de révolution du disque en vue de favoriser le freinage sous le ruissellement d'eau et le refroidissement en général. Ces trous sont obtenus par perçage du disque, après élaboration de celui-ci.

Le document FR-A-2 143 329 enseigne en particulier le perçage de trous dans une ébauche de frein, après densification par immersion dans une résine liquide, en vue d'évacuer les gaz formés au cours de la carbonisation de la résine. Ces trous jouent alors uniquement le rôle d'évents, connus de très longue date , dans les techniques de fonderie classiques.

Le document GB-A-2 028 230 enseigne par ailleurs le perçage de trous dans des couches de fibres déjà densifiées, en vue d'y introduire d'autres fibres.

La présente invention a justement pour objet un procédé de fabrication d'une pièce en matériau composite présentant une étape de densification plus facile à réaliser que celle des procédés de l'art antérieur.

Elle se rapporte à l'élaboration de trous dans le substrat fibreux d'une pièce en composite, avant toute densification. D'une part ces trous ne sont pas obtenus par perçage après élaboration du matériau définitif et, d'autre part ils ne sont pas destinés à servir au passage de fibres les obturant.

De façon plus précise, l'invention a pour objet un procédé de fabrication d'une pièce en matériau composite formé de fibres de renforcement en carbone, noyées dans une matrice en carbone, caractérisé en ce qu'il consiste à :

(a) former un substrat poreux constitué exclusivement de fibres carbonées,

(b) former dans le substrat poreux des trous débouchants dont les axes sont perpendiculaires à la paroi du substrat ayant la plus grande surface,

(c) densifier le substrat poreux par décomposition thermique d'un courant de gaz d'hydrocarbure afin de former la matrice de carbone par dépôt de carbone ou graphite pyrolytique dans les pores du substrat, les trous pratiqués dans le substrat et qui persistent servant à diminuer les parcours du gaz dans le substrat.

Par fibre de renforcement, il faut comprendre tout fil court ou long, tressé ou non, généralement utilisé dans le domaine des matériaux composites.

Par substrat fibreux, il faut bien entendu comprendre un ensemble de fibres nues, non imprégnées de résine et non densifiées, en carbone ou sous forme de précurseur du carbone.

L'essentiel des trous selon l'invention est de réduire la longueur des trajets que le gaz à pyrolyser doit parcourir dans les porosités fines du substrat, au cours de la densification. En effet, il est fondamental qu'une partie au moins de ce gaz actif parvienne dans les zones les moins accessibles du substrat sans s'être décomposée sur les parois chaudes rencontrées. Le craquage tend en effet à se produire dès le premier contact des molécules avec une paroi chaude. Au contraire, si le but est seulement d'évacuer des gaz passifs formés lors de la pyrolyse d'une résine comme dans le document FR-A-2 144 329, la longueur des trajets est sans importance ; seule compte alors la présence d'une fuite de gaz puisque ce dernier ne réagit pas avec les parois de la pièce.

Les trous selon l'invention assurent ainsi un accès identique à toutes les couches du substrat poreux conduisant à l'obtention d'une densité uniforme de la pièce en matériau composite et à une réduction considérable de la durée de densification en phase gazeuse. Par ailleurs, la durée de la densification devient quasi-indépendante de l'épaisseur de la pièce. En effet, la pénétration du gaz dans tout le substrat poreux s'effectue non seulement par les surfaces externes du substrat mais surtout par les parois des trous.

Enfin, ces trous constituent un point d'arrêt de propagation des fissures dans la pièce obtenue, augmentant ainsi sa résistance aux chocs.

Le gaz d'hydrocarbure est formé d'un hydrocarbure gazeux ou d'un mélange d'hydrocarbures gazeux. Ces hydrocarbures sont des hydrocarbures saturés ou non, substitués ou non, ayant notamment de 1 à 4 atomes de carbone tels que le méthane, l'éthane, le propane et le butane.

Le procédé de l'invention s'applique à tous les types de substrats poreux envisageables (tissus, feutres, etc.) pour autant que ceux-ci n'atteignent pas une valeur trop proche de la densité théoriquement maximale en fibres de carbone du substrat poreux non muni des trous.

Le procédé de l'invention peut donc s'appliquer sur des mats aléatoires aiguilletés ou non, sur des mèches de filaments multiples aléatoirement disposées, sur des nappes unidirectionnelles ou sur des tissus empilés, etc.

Pour ces types de substrat poreux, les trous sont formés par déplacement ou écartement des fibres du substrat, sans découpage de celles-ci, en enfonçant par exemple, de façon individuelle ou collective des aiguilles parfaitement lisses et effilées, susceptibles de n'exercer que de très faibles dommages sur les fibres qu'elles rencontrent, lors de leurs traversées du substrat.

Dans le cas de substrats poreux très denses (tissage tridimensionnel notamment) le procédé selon l'invention peut aussi s'appliquer à condition de prévoir des trous vides, c'est° à-dire ne servant pas à l'introduction des fibres, lors du tissage du substrat poreux.

Une des particularités essentielles du procédé de l'invention est que les divers substrats poreux, perforés, conservent la mémoire des trous effectués, après la réalisation de la matrice de carbone ou au moins après les premières phases de réalisation de cette matrice.

Suivant le procédé de perçage utilisé, les trous créés ne se présentent pas toujours de manière identique. En effet, certains substrats comportant des fibres courtes ont tendance à reboucher partiellement les trous formés en donnant un aspect pelucheux aux parois de ces trous. La lumière ne peut donc plus traverser la pièce en composite par les trous mais ceux-ci apparaissent très nettement, dans leur forme originale, sur une radiographie aux rayons X. Le rôle de tels trous pelucheux est aussi efficace pour le passage des gaz carbonés, et donc pour l'accélération de la densification, que celui de trous à parois lisses.

Les trous pratiqués dans des substrats à fibres longues et groupées, telles que mèches et tissus, n'ont pas toujours de parois pelucheuses, mais peuvent également être étanches à la lumière tout en conservant leur forme initiale en radiographie X.

Afin d'obtenir des trous à bords plus nets, présentant en particulier des parois lisses et régulières, il est possible de disposer dans chacun des trous pratiqués dans le substrat, des tiges de matériaux non carburables aux températures concernées et en particulier en cuivre ou molybdène. Ces tiges peuvent être introduites soit pendant les traitements thermiques éventuels du substrat, non encore densifié, servant à améliorer les caractéristiques du substrat ou si celui-ci est initialement sous forme de précurseur du carbone, soit au début de la densification du substrat par CVD. La densification du substrat par CVD se poursuit bien entendu en l'absence de ces tiges.

Suivant la nature de la porosité du substrat, il est possible de faire subir une pré-imprégnation au substrat dans un bain liquide carboné, par exemple dans un hydrocarbure liquide, et faire suivre cette pré-imprégnation d'un égouttage ayant pour but de laisser évacuer le liquide présent dans les trous. Une carbonisation de l'ensemble permet alors la formation d'une matrice de coke poreux. Le matériau obtenu peut alors subir la densification par voie gazeuse, sans avoir perdu les facilités d'accès du gaz à l'intérieur du matériau poreux, ce qui n'est pas le cas avec les procédés de l'art antérieur.

A l'achèvement de la densification interne du matériau par voie gazeuse, une modification volontaire des conditions physiques du craquage du gaz carboné peut conduire à réaliser une croûte de carbone ou graphite pyrolytique sur les surfaces externes de la pièce en matériau composite ainsi que sur les parois des trous afin de les obturer partiellement ou totalement. Dans ce cas, le diamètre des trous peut avoir été initialement prévu suffisamment petit en vue de cette obturation automatique en fin de densification.

Ces modifications volontaires consistent en particulier en l'augmentation de la température ou de la pression du gaz.

En mécanique, un trou est d'une manière générale un procédé d'arrêt de propagation des fissures dans le matériau. Dans le cadre de l'invention, ces trous sont particulièrement efficaces car leurs parois sont des zones à densité de matrice maximale, ce qui rend ces parois particulièrement résistantes. En outre, les fibres ne sont pas coupées et entourent simplement les trous.

Pour certaines pièces en matériau composite, il peut être nécessaire d'obturer complètement les trous formés dans le substrat poreux.

Dans ce cas, l'obturation finale des trous, c'est-à-dire après densification en phase vapeur, peut consister à immerger le matériau densifié dans un bain liquide carboné constitué par exemple de résine pyrolysable, ou encore d'hydrocarbure liquide chargé ou non, puis à carboniser l'ensemble pour obtenir un coke qui peut servir éventuellement de support à une dernière densification par décomposition thermique de gaz d'hydrocarbure.

Il est aussi possible d'obturer les trous par un matériau plus courant et moins coûteux que le carbone, éventuellement apte au frottement tel que certains métaux ou des mélanges céramique-métal par exemple. Comme matériau on peut citer le cuivre et tous les produits commercialement utilisés dans les patins de freins.

On peut aussi utiliser des matériaux ayant un pouvoir anti-oxydant pour le carbone tels que les phosphates tricalciques comme matériau d'obturation des trous.

Bien entendu, cette obturation des trous par un matériau non carboné doit être réalisée après la densification du matériau composite en phase gazeuse.

L'invention a aussi pour objet des pièces en matériau composite formées de fibres carbonées de renforcement noyées dans une matrice carbonée, obtenues par le procédé selon l'invention, ces pièces comportant des trous dont les axes sont perpendiculaires à la paroi de la pièce ayant la plus grande surface.

Suivant le procédé utilisé, les trous peuvent présenter des parois lisses ou régulières ou bien des parois pelucheuses. En outre, ces trous peuvent être bouchés avec l'un des matériaux non carbonés décrits précédemment. Dans ce cas, l'existence initiale des trous peut être mise en évidence par radiographie aux rayons X et surtout par micrographie optique.

En particulier, ces pièces en matériau composite sont des disques de frein. Dans ce cas, les trous sont orientés parallèlement à l'axe de révolution du disque de frein. Lorsque ces trous ne sont pas complètement bouchés lors de la densification, ils permettent d'augmenter l'efficacité du freinage sur piste mouillée en améliorant le temps de réponse des freins grâce à la pénétration de l'eau dans les trous.

L'efficacité de ces trous, lors de la fabrication des pièces en composite, dépend de plusieurs facteurs parmi lesquels se trouvent la distance entre les trous et le diamètre des trous ou le périmètre total des parois des trous par unité de surface de la pièce en matériau composite.

Dans le cas d'un disque de frein d'avion, un ordre de grandeur non limitatif de l'invention situe le diamètre des trous de 0,5 à 5 mm et leur distance de 3 à 30 mm pour être efficace.

Ces trous peuvent être répartis de façon aléatoire ou non. Pour ce qui est du frottement, les trous peuvent avoir une répartition quelconque lorsqu'ils sont bouchés en fin de densification du disque de frein. Inversement, lorsque les trous sont non obstrués, l'usure minimale des disques de frein est obtenue lorsque les trous sont disposés sur des cercles concentriques centrés sur l'axe de révolution du disque, afin de conserver au disque de frein une proportion suffisante de surface pouvant frotter circonférentiellement, sans discontinuité.

D'autres caractéristiques et avantages de l'invention ressortiront mieux de la description qui va suivre, donnée à titre illustratif et non limitatif, en référence aux figures annexées, dans lesquelles :
– les figures 1, 3 et 4 sont des diagrammes illustrant des modes de réalisation du procédé de fabrication d'une pièce en matériau composite, conformément à l'invention, et
– la figure 2 représente schématiquement, en perspective, un disque de frein obtenu par le procédé conforme à l'invention.

EXEMPLE 1

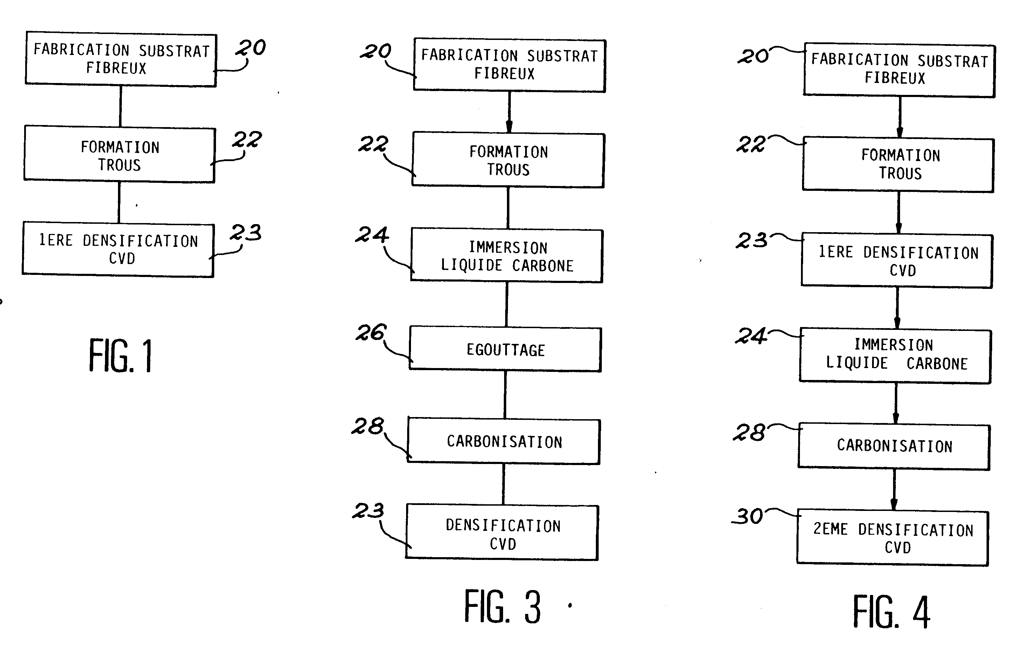

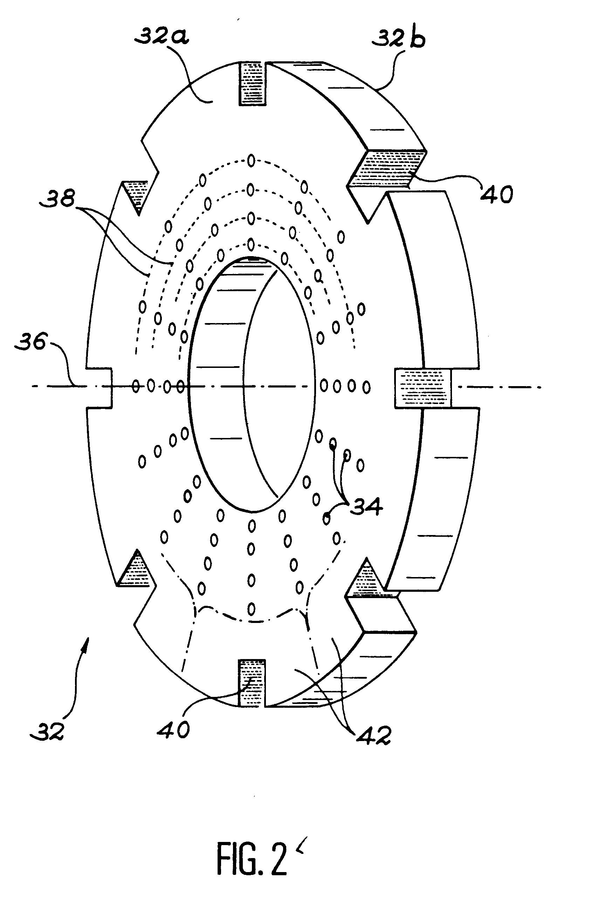

En référence à la figure 1, on va décrire le mode préféré de réalisation d'un disque de frein conforme à l'invention.

La première étape du procédé, comme représenté par le bloc 20, consiste à former un substrat fibreux poreux en carbone, en disposant des fibres de carbone nues (non imprégnées ou non densifiées) selon n directions d'un même plan, de façon connue. La forme du substrat est en particulier celle d'un disque de frein.

La seconde étape du procédé, schématisée par le bloc 22, consiste à former des trous dans le substrat fibreux, de 0,5 à 5 mm de diamètre, par enfoncement d'aiguilles métalliques parfaitement lisses et effilées afin de dèplacer les fibres sans les détruire. La densité des trous est de 1 par cm$^2$.

Comme schématisé par le bloc 23, l'étape suivante du procédé consiste à déposer dans le substrat poreux du carbone pyrolytique, par dépôt chimique en phase vapeur (CVD) en utilisant du méthane. La décomposition chimique est réalisée dans un four, maintenu au voisinage de 1000°C, pendant 150 heures environ, le gaz étant mis en circulation sous une pression de 500 à 3000 Pa.

Avec cette unique étape de densification, on obtient une densité de 1,8, pour un disque de frein de 20 mm d'épaisseur.

La densification selon l'art antérieur par CVD nécessite 600 heures pour un disque de frein de mêmes dimensions.

Un usinage du substrat densifié permet de lui donner sa forme finale.

Ce procédé permet d'obtenir un disque de frein tel que représenté sur la figure 2, constitué d'une structure mécanique 32 en carbone-carbone pourvue de trous 34 non obturés dont les axes sont orientés parallèlement à l'axe de révolution 36 du disque, et donc perpendiculairement aux surfaces 32a et 32b du disque ayant la plus grande surface. Ces trous 34 débouchent de chaque côté 32a et 32b du disque.

En outre, ils sont disposés sur des cercles concentriques 38, centrés sur l'axe de révolution 36.

EXEMPLE 2

Dans cet exemple 2, les étapes identiques en tout point à celles de l'exemple 1 sont représentées sur la figure 3 par un bloc ayant les mêmes références.

Cet exemple 2 permet de montrer l'efficacité du procédé selon l'invention. En effet, il est possible d'utiliser une densification par imprégnation liquide du substrat poreux, avant la densification en phase vapeur, avec un rendement très supérieur à celui obtenu classiquement avec un substrat non perforé.

A cet effet, on immerge le substrat fibreux muni de ses trous, de l'exemple 1, dans un hydrocarbure liquide tel qu'un brai de houille, comme indiqué par le bloc 24 de la figure 3. On laisse alors s'égoutter le substrat à l'air libre, comme l'indique le bloc 26 afin de ne pas obturer les trous (34 figure 2) lors de l'étape suivante de carbonisation.

Cette étape consiste à placer le substrat imprégné dans un four porté à 700°C environ afin de transformer l'hydrocarbure liquide présent dans les trous et dans les pososités du substrat en carbone ou graphite pyrolytique. Cette étape est schématisée par le bloc 28.

Dans cet exemple de mise en oeuvre, les trous du disque de frein ne sont que partiellement obturés.

EXEMPLE 3

Sur la figure 4, on a représenté un mode de réalisation du procédé de l'invention permettant d'obtenir des pièces en carbone-carbone dont les trous selon l'invention sont obturés en fin de densification.

Les étapes de ce mode de réalisation, identiques en tout point à celles décrites précédemment telles que la fabrication du substrat fibreux, la formation des trous, la première densification par CVD, l'immersion dans un hydrocarbure liquide et la carbonisation sont représentés par un bloc ayant les mêmes références.

Ce mode de mise en oeuvre se distingue donc de celui de l'exemple 2 par la réalisation d'une seconde étape de densification, schématisée en 30, par dépôt chimique en phase vapeur de carbone ou graphite pyrolytique juste après la carbonisation 28 de l'hydrocarbure liquide. Cette densification finale est réalisée par craquage de méthane dans un four porté à 1000°C, pendant 10 à 20 heures.

En outre, l'étape d'égouttage entre l'immersion 24 dans l'hydrocarbure liquide et la carbonisation 28 est supprimée, ce qui contribue à l'obturation des trous.

La description donnée précédemment n'a été donnée qu'à titre illustratif, toute modification, sans pour autant sortir du cadre de l'invention pouvant être envisagée. Par exemple, il est possible de faire précéder la première densification 23 par CVD de l'exemple 3 d'une immersion dans un hydrocarbure liquide, suivie d'un égouttage et d'une carbonisation telles que décrites dans l'exemple 2.

**Revendications**

1. Procédé de fabrication d'une pièce en matériau composite formé de fibres de renforcement en carbone, noyées dans une matrice en carbone, caractérisé en ce qu'il consiste à :
   (a) former (20) un substrat poreux constitué exclusivement de fibres carbonées,
   (b) former (22) dans le substrat poreux des trous débouchants (34) dont les axes sont perpendiculaires à la paroi (32a, 32b) du substrat ayant la plus grande surface, puis
   (c) densifier (23) le substrat poreux par décomposition thermique d'un courant de gaz d'hydrocarbure afin de former la matrice de carbone (32) par dépôt de carbone ou graphite pyrolytique dans les pores du substrat, les trous pratiqués dans le substrat et qui persistent servant à diminuer les parcours du gaz dans le substrat.

2. Procédé selon la revendication 1, caractérisé en ce que les trous (34) sont formés par écartement des fibres du substrat.

3. Procédé selon la revendication 1, caractérisé en ce que le substrat étant obtenu par tissage, les trous (34) sont formés lors du tissage.

4. Procédé selon l'une quelconque des revendications 1 à 3, caractérisé en ce que l'on effectue entre les étapes (b) et (c), l'immersion (24) du substrat poreux dans un bain liquide carboné, suivie d'un égouttage (26) puis d'une carbonisation (28) de l'ensemble n'obturant pas les trous (34).

5. Procédé selon l'une quelconque des revendications 1 à 4, caractérisé en ce qu'il comprend essentiellement les étapes suivantes :
   (a) formation (20) du substrat poreux,

(b) formation des trous (34) dans ledit substrat,

(c) densification du substrat poreux muni des trous (34), par décomposition thermique d'hydrocarbure, puis

(d) obturation (24, 28, 30) partielle ou totale des trous (34) subsistant éventuellement dans le substrat densifié.

6. Procédé selon la revendication 5, caractérisé en ce que l'étape (d) consiste à former, par décomposition thermique d'hydrocarbure, une croûte de carbone ou graphite pyrolytique sur les parois des trous afin de les obturer partiellement ou totalement.

7. Procédé selon la revendication 5, caractérisé en ce que l'étape (d) consiste à immerger (24) le substrat densifié dans un bain liquide carboné, puis à carboniser (28) l'ensemble et éventuellement à effectuer une densification ultime (30) par décomposition thermique d'un courant de gaz d'hydrocarbure.

8. Procédé selon l'une quelconque des revendications 5 à 7, caractérisé en ce que l'on effectue l'obturation des trous (34) subsistant éventuellement par au moins un matériau choisi parmi les métaux et les mélanges céramique-métal et les matériaux anti-oxydants pour le carbone.

9. Pièce en matériau composite obtenue par le procédé selon l'une quelconque des revendications 1 à 8, caractérisée en ce que les trous (34) présentent des parois lisses et régulières.

10. Pièce en matériau composite obtenue par le procédé selon une quelconque des revendications 1 à 8, caractérisée en ce que les trous (34) présentent des parois pelucheuses rendant les trous peu visibles à l'oeil nu mais visibles en radiographie X ou micrographie optique.

11. Disque de frein comportant un axe de révolution (36), caractérisé en ce qu'il est formé d'une pièce en matériau composite selon la revendication 9 ou 10.

12. Disque de frein selon la revendication 11, caractérisé en ce que les axes des trous (34) sont parallèles audit axe de révolution (36).

13. Disque de frein selon la revendication 11 ou 12, caractérisé en ce que les trous (34) sont disposés sur des cercles concentriques (38) centrés sur ledit axe de révolution (36).

## Patentansprüche

1. Verfahren zur Herstellung eines Gegenstandes aus Verbundmaterial aus Verstärkungsfasern aus Kohlenstoff, die in eine Matrix aus Kohlenstoff eingetaucht sind, dadurch gekennzeichnet, daß es darin besteht:

(a) ein poröses Substrat zu bilden (20), das ausschließlich aus Kohlenstoffasern besteht,

(b) in dem porösen Substrat sich öffnende Löcher (34) zu bilden (22), deren Achsen senkrecht zu der Wand (32a, 32b) des Substrats sind, die die größte Oberfläche besitzt, dann

(c) das poröse Substrat durch thermisches Zersetzen eines Gasstromes aus Kohlenwasserstoff zu verdichten (23), um die Kohlenstoffmatrix (32) durch Abscheiden von Kohlenstoff oder pyrolytischem Graphit in den Poren des Substrats zu bilden, wobei die in das Substrat geformten Löcher, die bestehen bleiben, dazu dienen, die Weglängen des Gases in dem Substrat zu verringern.

2. Verfahren nach Anspruch 1, dadurch gekennzeichnet, daß die Löcher (34) durch Entfernen von Fasern aus dem Substrat gebildet werden.

3. Verfahren nach Anspruch 1, dadurch gekennzeichnet, daß das Substrat durch Weben hergestellt wird, wobei die Löcher (34) während des Webens erzeugt werden.

4. Verfahren nach einem der Ansprüche 1 bis 3, dadurch gekennzeichnet, daß man zwischen den Schritten (b) und (c) das Eintauchen (24) des porösen Substrats in einem flüssigen, kohlenstoffhaltigen Bad durchführt, das von Abtropfen (26) und dann einer Karbonisierung (28) der Anordnung, wobei die Löcher (34) nicht verschlossen werden, gefolgt wird.

5. Verfahren nach einem der Ansprüche 1 bis 4, dadurch gekennzeichnet, daß es im wesentlichen die folgenden Verfahrensschritte aufweist:

(a) Bilden (20) des porösen Substrats,

(b) Bilden der Löcher (34) in dem Substrat,

(c) Verdichten des porösen, mit Löchern (34) versehenen Substrats durch thermische Kohlenwasserstoffzersetzung, dann

(d) teilweises oder vollständiges Verstopfen (24, 28, 30) der Löcher (34), die eventuell in dem verdichteten Substrat bestehen bleiben.

6. Verfahren nach Anspruch 5, dadurch gekennzeichnet, daß der Schritt (d) darin besteht, durch thermische Kohlenwasserstoffzersetzung eine Kohlenstoff- oder pyrolytische Graphitkruste auf den Wänden der Löcher zu bilden, um sie teilweise oder vollständig zu verschließen.

7. Verfahren nach Anspruch 5, dadurch gekennzeichnet, daß der Schritt (d) darin besteht, das verdichtete Substrat in ein flüssiges, kohlenstoffhaltiges Bad einzutauchen (24), dann die Anordnung zu karbonisieren und eventuell eine abschließende Verdichtung (30) durch thermische Zersetzung eines Kohlenwasserstoffgasstroms durchzuführen.

8. Verfahren nach einem der Ansprüche 5 bis 7, dadurch gekennzeichnet, daß man das Verschließen der eventuell verbliebenen Löcher (34) mit wenigstens einem Material durchführt, das aus den Metallen und den metallo-keramischen Verbindungen und den antioxydierenden Materialien für den Kohlenstoff ausgewählt wird.

9. Gegenstand aus einem Verbundmaterial, der durch ein Verfahren nach einem der Ansprüche 1 bis 8 erhalten wird, dadurch gekennzeichnet, daß die Löcher (34) glatte und regelmäßige Wände aufweisen.

10. Gegenstand aus einem Verbundmaterial, der durch ein Verfahren nach einem der Ansprüche 1 bis 8 erhalten wird, dadurch gekennzeichnet, daß die Löcher (34) plüschartige Wände aufweisen, die die Löcher für das nackte Auge wenig sichtbar machen, sie aber für die Röntgenographie oder die optische Mikrographie sichtbar machen.

11. Bremsscheibe mit einer Drehachse (36), dadurch gekennzeichnet, daß sie aus einem Teil aus Verbundmaterial nach Anspruch 9 oder 10 geformt ist.

12. Bremsscheibe nach Anspruch 11, dadurch gekennzeichnet, daß die Achsen der Löcher (34) parallel zu der Drehachse (36) sind.

13. Bremsscheibe nach Anspruch 11 oder 12, dadurch gekennzeichnet, daß die Löcher auf konzentrischen Kreisen (38) zentriert zu der Drehachse (36) angeordnet sind.

## Claims

1. Process for the production of a composite material part formed from carbon reinforcing fibres embedded in a carbon matrix, characterized in that it comprises:
   a) forming (20) a porous substrate exclusively constituted by carbon-containing fibres,
   b) forming (22) in the porous substrate issuing holes, whose axes are perpendicular to the wall (32a,32b) of the substrate with the largest surface and
   c) densifying (23) the porous substrate by thermal decomposition of a hydrocarbon gas flow in order to form the carbon matrix (32) by depositing pyrolytic graphite or carbon in the pores of the substrate, the holes made in the substrate and which remain serve to reduce the paths of the gas in the substrate.

2. Process according to claim 1, characterized in that the holes (34) are formed by spacing apart the fibres of the substrate.

3. Process according to claim 1, characterized in that, as the substrate is obtained by weaving, the holes (34) are formed during weaving.

4. Process according to any one of the claims 1 to 3, characterized in that between stages b) and c), the porous substrate is immersed (24) in a carbon-containing liquid bath, followed by draining (26) and carbonization (28) of the assembly not sealing holes (34).

5. Process according to any one of the claims 1 to 4, characterized in that it essentially comprises the following stages:
   a) formation (20) of the porous substrate,
   b) formation of the holes (34) in said substrate,
   c) densification of the porous substrate provided with holes (34) by thermal decomposition of hydrocarbon and then,
   d) partial or total sealing (24,28,30) of the holes (34) possibly left in the densified substrate.

6. Process according to claim 5, characterized in that stage d) consists of forming, by thermal décomposition of hydrocarbon, a pyrolytic graphite or carbon crust on the walls of the holes, in order to partly or totally seal them.

7. Process according to claim 5, characterized in that stage d) consists of immersing (24) the densified substrate in a carbon-containing liquid bath, followed by the carbonization (28) of the assembly and the optional performance of a final densification (30) by thermal decomposition of a hydrocarbon gas flow.

8. Process according to any one of the claims 5 to 7, characterized in that the possibly left behind holes (34) are sealed by at least one material chosen from among metals and ceramic-metal mixtures and anti-oxidizing materials for the carbon.

9. Composite material part obtained by the process of any one of the claims 1 to 8, characterized in that the holes (34) have smooth, regular walls.

10. Composite material part obtained by the process according to any one of the claims 1 to 8, characterized in that the holes (34) have fluffy walls making them scarcely visible with the naked eye, but visible in X-radiography or optical micrography.

11. Brake disk having an axis of revolution (36), characterized in that it is formed by a composite material part according to claims 9 or 10.

12. Brake disk according to claim 11, characterized in that the axes of the holes (34) are parallel to the axis of revolution (36).

13. Brake disk according to claims 11 or 12, characterized in that the holes (34) are positioned on concentric circles (38) centred on the axis of revolution (36).

FABRICATION SUBSTRAT
FIBREUX — 20

FORMATION
TROUS — 22

1ERE DENSIFICATION
CVD — 23

## FIG. 1

20 — FABRICATION SUBSTRAT
FIBREUX

22 — FORMATION
TROUS

24 — IMMERSION
LIQUIDE CARBONE

26 — EGOUTTAGE

28 — CARBONISATION

23 — DENSIFICATION
CVD

## FIG. 3

20 — FABRICATION SUBSTRAT
FIBREUX

22 — FORMATION
TROUS

23 — 1ERE DENSIFICATION
CVD

24 — IMMERSION
LIQUIDE CARBONE

28 — CARBONISATION

30 — 2EME DENSIFICATION
CVD

## FIG. 4

EP 0 374 158 B1

FIG. 2